# EUROPEAN PATENT APPLICATION

(11) **EP 4 818 998 A1**
(43) Date of publication of application: **07.10.2026**
(21) Application number: 26169681.9
(22) Date of filing: 31.03.2026
(51) Int. Cl.: G06Q 10/087, G06N 5/01

(54) **APPARATUS, SYSTEMS, AND METHODS FOR STORE-LEVEL ANALYSIS USING ARTIFICIAL INTELLIGENCE**

(30) Priority: 31.03.2025 US 202563781081 P
(71) Applicant: Nielsen Consumer LLC, Chicago, IL 60606 (US)
(72) Inventor: DIEZ MARTIN, Carlos, Chicago, Illinois, 60606 (US); YEBES TORRES, Jose Javier, Chicago, Illinois, 60606 (US); MARTI GONZALEZ, Carlos, Chicago, Illinois, 60606 (US)
(74) Representative: Samson & Partner Patentanwälte mbB

(57) **Abstract**

Apparatus, systems, and methods for store-level analysis using artificial intelligence are disclosed. An example apparatus includes at least one programmable circuit to generate a feature vector based on an alert report, the feature vector including features corresponding to alert types; execute a supervised machine learning model using the feature vector to generate a supervised output for an alert in the alert report, the supervised output representing a likelihood of the alert warranting an action; execute an unsupervised machine learning model using the feature vector to generate an unsupervised output; classify the alert based on at least one of the supervised output or the unsupervised output; and cause an electronic device to execute the action based on the classification of the alert, the action associated with a status of the alert or a request for additional store-level data.

## Description

### RELATED APPLICATION

This patent claims the benefit of U.S. Provisional Patent Application No. 63/781,081, which was filed on March 31, 2025. U.S. Provisional Patent Application No. 63/781,081 is hereby incorporated herein by reference in its entirety. Priority to U.S. Provisional Patent Application No. 63/781,081 is hereby claimed.

### FIELD OF THE DISCLOSURE

This disclosure relates generally to retail analysis and, more particularly, to apparatus, systems, and methods for store-level retail analysis using artificial intelligence.

### BACKGROUND

An auditor collects retail information such as sales data and stock level data for items through an in-person visit to a store.

### BRIEF DESCRIPTION OF THE DRAWINGS

FIG. 1 is a block diagram of an example system in which an example alert analysis circuitry operates to perform machine learning analysis of alerts associated with store-level analyses.
FIG. 2 illustrates an example alert report.
FIG. 3 is a block diagram of an example implementation of the training circuitry of FIG. 1.
FIG. 4 illustrates an example action report.
FIG. 5 is a block diagram of an example implementation of the store audit analysis circuitry of FIG. 1.
FIG. 6 is a block diagram of an example implementation of the alert analysis circuitry of FIG. 1.
FIG. 7 illustrates a portion of an example feature vector in accordance with teachings of this disclosure.
FIG. 8 is a diagram of example alert classifications in accordance with teachings of this disclosure.
FIG. 9 is a flowchart representative of example machine-readable instructions and/or example operations that may be executed, instantiated, and/or performed by example programmable circuitry to implement the training circuitry of FIG. 3.
FIG. 10 is another flowchart representative of example machine-readable instructions and/or example operations that may be executed, instantiated, and/or performed by example programmable circuitry to implement the training circuitry of FIG. 3.
FIG. 11 is a flowchart representative of example machine-readable instructions and/or example operations that may be executed, instantiated, and/or performed by example programmable circuitry to implement the store audit analysis circuitry of FIG. 5 and the alert analysis circuitry of FIG. 6.
FIG. 12 is another flowchart representative of example machine-readable instructions and/or example operations that may be executed, instantiated, and/or performed by example programmable circuitry to implement the store audit analysis circuitry of FIG. 5 and the alert analysis circuitry of FIG. 6.
FIG. 13 is a block diagram of an example processing platform including programmable circuitry structured to execute, instantiate, and/or perform the example machine-readable instructions and/or perform the example operations of FIGS. 9 and 10 to implement the training circuitry of FIG. 3.
FIG. 14 is a block diagram of an example processing platform including programmable circuitry structured to execute, instantiate, and/or perform the example machine-readable instructions and/or perform the example operations of FIGS. 11 and 12 to implement the store audit analysis circuitry of FIG. 5 and the alert analysis circuitry of FIG. 6.

In general, the same reference numbers will be used throughout the drawing(s) and accompanying written description to refer to the same or like parts. The figures are not necessarily to scale.

### DETAILED DESCRIPTION

Sales, inventory, and other retail data can vary based on factors such as retailer, season, and other variables. Auditors collect retail information through in-person visits to a store or other retail location, gathering data on sales, stock levels, etc. for items. The data collected can be used to generate retail metrics. In some instances, during an in-store visit, auditors are provided instructions with respect to conducting the audit through a mobile application installed on an electronic device such as a smartphone. However, some store visits are not conducted correctly by auditors, resulting in inaccurate data collection. The incorrectly conducted audits can be due to auditor error(s), in-store issue(s), or problem(s) with the data being collected. If the mobile application determines that an instruction has not been followed (e.g., data is missing from the visit), an alert is generated. A set of alerts may result at the end of each store visit (e.g., store-level analysis or SLA).

Typically, a quality review team manually reviews anomalies (e.g., the alerts) associated with the store-level analysis and determines actions to take in response to the anomalies, such as re-visiting the store to collect the data, assigning store supervision to the auditor, providing training, or implementing other measures. However, manual review of alerts is time consuming and labor intensive. Moreover, some alerts can be ignored because the data was collected (e.g., in a different format than expected by the application). Further, many alerts do not rise to the level of warranting another visit to the store to re-perform the audit (e.g., because the data collected can be adjusted (e.g., corrected) without revisiting the store).

Examples disclosed herein provide for anomaly detection using supervised and unsupervised machine learning techniques. Examples disclosed herein combine a supervised deep learning model with an unsupervised decision tree-based model. The outputs from both models are integrated to form a decision with respect to whether an alert associated with an in-store analysis warrants an action. Based on the alert classification, some examples disclosed herein execute automated actions to resolve the alert (i.e., execute actions without human intervention), such as closing the alert if no further action is determined to be warranted or outputting an instruction via a mobile application for an in-store audit to be re-performed. In some examples disclosed herein, the decision of whether an action should be performed in response to an alert is based on a likelihood of an alert warranting an action as predicted by the supervised model and anomalies or rarities (e.g., a previously unseen alert) in the alert data as detected by the unsupervised model. In examples disclosed herein, the combined supervised and unsupervised machine learning approach mitigates the reliance on extensive labeled data in supervised methods while providing context for outputs of the unsupervised model in view of consideration of those outputs with the supervised model outputs. For example, the supervised model leverages historical patterns to identify known anomalies, while the unsupervised model detects novel or rare cases that represent statistical outliers.

As compared to the use of rules-based logic to analyze alerts or anomalies, machine learning models can handle large volumes of data more efficiently, allowing for better scalability across multiple markets and/or countries. Further, machine learning models can adapt to changes in auditor behavior over time, providing for consistency in accuracy and reliability of the outputs. Additionally, machine learning-based solutions can detect patterns and anomalies that may not be apparent through manual analysis, leading to more precise assessments of the alerts. Also, while traditional hybrid machine learning methods employ sequential processing or basic ensembling, examples disclosed herein implement a calibrated correlation between, for instance, outputs of a supervised model (e.g., a Multi-Layer Perceptron (MLP)) and outputs of an unsupervised model (e.g., an Isolation Forest, an autoencoder). Examples disclosed herein normalize and rescale output(s) of the model(s) to maintain their relative distributions while enabling comparison of the outputs.

Some known anomaly detection methods apply uniform thresholds to model outputs. Examples disclosed herein implement dynamic adjustments to confidence thresholds based on severity metrics associated with specific alert types. By incorporating domain knowledge about alert severity into the confidence calibration process, examples disclosed herein are sensitive to particular alerts regardless of the statistical representation of those alerts in the training data. As a result, examples disclosed herein provide a targeted solution to store-level analysis classifications beyond generic confidence adjustment methods.

Examples disclosed herein further address instances in which certain high-severity alerts are not consistently classified as warranting action due to limitation in severity-based classifications. Examples disclosed herein perform a multi-faceted evaluation that considers not only a severity score but also contextual factors and alert correlation patterns. As a result, examples disclosed herein provide for more reliable detection of alerts that might be overlooked by known methods that rely primarily on individual alert characteristics. The disclosed classification strategy incorporates alert relationship modeling to identify complex patterns that indicate actionable situations, even when an individual alert may not warrant action on its own.

Examples disclosed herein provide for accuracy in assessing alerts with computational efficiency. For example, disclosed examples provide for feature-based preprocessing of data, which reduces computational resources in executing the deep learning architectures. Also, unlike known approaches to workflow optimization that implement filtering based on confidence scores, examples disclosed herein perform a prioritization evaluation that differentiates between alert types based on confidence levels and operational characteristics. As a result, examples disclosed herein reduce the volume of alerts identified for further review (e.g., manual assessment). In examples disclosed herein, alerts identified with high-confidence predictions as warranting action are automatically identified by the model(s) and the disclosed examples proceed to implement actions (e.g., output instructions via the mobile application) without human intervention. Thus, examples disclosed herein provide for increased automation in handling alerts associated with store-level analysis.

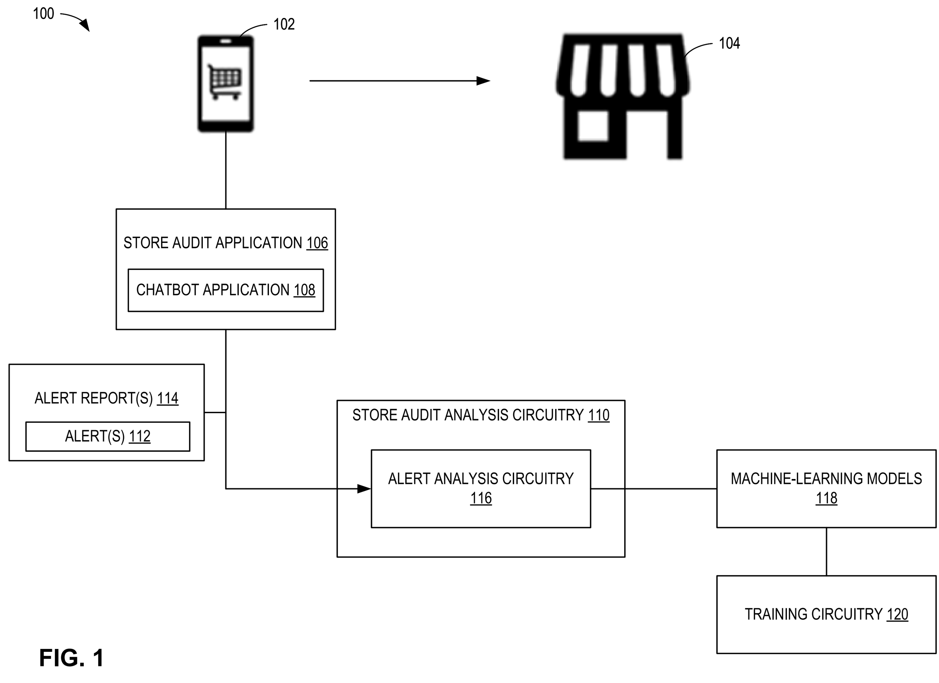

FIG. 1 is a block diagram of an example system 100 in which an example alert analysis circuitry operates to evaluate alert data output by an electronic device 102 (e.g., a smartphone, a tablet) in connection with a visit to a store 104 by an auditor. During a visit to the store 104, the auditor collects data using a store audit application 106 (e.g., a mobile application) executed by programmable circuitry of the electronic device 102. For example, the store audit application 106 can generate instructions or prompts to be followed by the auditor with respect to inputting sales price data for a particular item, capturing an image of the item, visiting a certain store in a certain location, etc. The data collected via the store audit application 106 can include, for example, price data for one or more items sold at the store 104 and/or inventory data for the item(s). The data collected and/or generated via the store audit application 106 can also include the day and time of visit, the store location, etc.

In the example of FIG. 1, the store audit application implements a chatbot application 108. The chatbot application 108 enables the auditor to interact with the store audit application 106. For example, the auditor can receive instructions or prompts via the chatbot application 108, can enter inputs into the chatbot application 108 in the form of questions for the chatbot or responses to prompts from the chatbot, etc.

The store audit application 106 is in communication with store audit analysis circuitry 110. In some examples, the store audit analysis circuitry 110 generates instructions for an in-store visit that are output (e.g., displayed) via the store audit application 106. For example, the store audit analysis circuitry 110 can generate instructions regarding a store location to be audited, products or product categories for which data is to be captured during the audit, etc. The store audit application 106 can display the instructions from the store audit analysis circuitry 110 via the electronic device 102 in the form of message(s) to the auditor; can generate and output prompts based on the instructions generated by the store audit analysis circuitry 110; etc. In some examples, the store audit analysis circuitry 110 analyzes the data collected by the auditor using the store audit application 106 to generate metrics using the sales data and/or inventory data by retailer, by season, etc. In some examples, the audit analysis circuitry 110 is implemented by, for example, an electronic device accessible by a user (e.g., quality control reviewer) who reviews the data collected during the in-store visits. In some examples, the store audit analysis circuitry 110 is implemented by one or more cloud-based devices.

In some examples, the store audit application 106 and/or the store audit analysis circuitry 110 generates one or more alerts 112 in connection with the collection of data for the in-store visit or audit. In some examples, if the store audit application 106 detects an anomaly with respect to compliance with the instructions output by the application 106 during the in-store visit, the store audit application 106 generates the alert(s) 112. For example, the store audit application 106 can detect incomplete or missing data about items to be reviewed during the audit; can recognize that data was collected from a different store location than instructed (e.g., where the store location is using global positioning system (GPS) data generated by the electronic device 102); can determine that a length of time for the auditor to audit the store took longer than expected; can detect failure of the auditor to respond to a chatbot prompt, etc. In some examples, the store audit application 106 generates the alert(s) 112 in real time or substantially real time (e.g., real time + 1 second) after the occurrence of the anomaly (e.g., after failure of the auditor to respond to a prompt). In some examples, the store audit application 106 generates the alert(s) 112 after a user input indicating that the in-store audit is completed. In some examples, the store audit analysis circuitry 110 generates the alert(s) 112 after the data generated by the store audit application 106 is transmitted to the cloud and/or another electronic device for analysis of the data. The alerts 112 can be compiled into an alert report 114 that is generated by the store audit application after the store visit is completed.

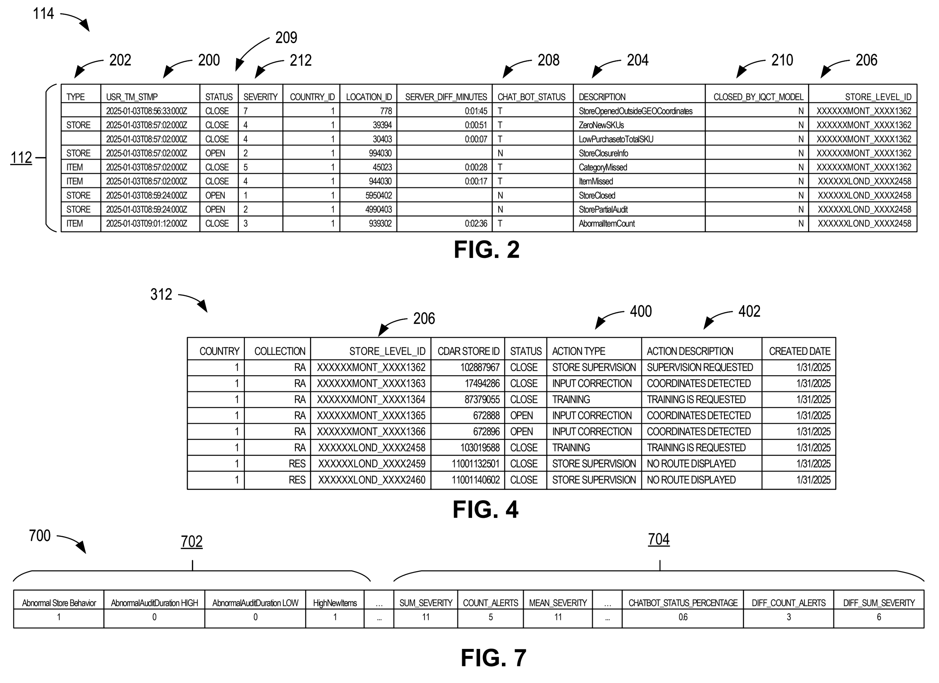

FIG. 2 illustrates an example alert report 114 including a plurality of alerts 112 generated by the store audit application 106 in connection with an in-store visit by an auditor using the application 106. As shown in FIG. 2, the alert report 114 includes a time and date stamp data 200 for each alert 112. The time and date stamp data 200 can be generated by the store audit application 106 based on, for example, the time at which the store audit application detected the anomaly. The example alert report 114 of FIG. 2 includes alert type data 202 that indicates whether the alert 112 is associated with a store issue (e.g., store location, store closure) or an item issue (e.g., a product to be reviewed). The alert report 114 includes a description 204 of the respective alerts 112. Also, the alert report 114 includes store-level analysis (SLA) identifiers 206, which are identifiers assigned to each alert 112 in the report 114 for a given store-level analysis of a store. In some examples, the same SLA identifier 206 is assigned to multiple alerts 112 if more than one alert was associated with the same store or store visit.

In some examples, the alert report 114 includes chatbot status data 208. The chatbot status data 208 indicates whether the auditor provided a response(s) to prompt(s) generated by the chatbot application 108 during the in-store visit. In some examples, store audit application 106 causes the chatbot application 108 to generate a prompt in response to detection of an anomaly (e.g., a missed category of products for which data was to be collected). The chatbot status data 208 can indicate whether the auditor engaged with the chatbot application 108 in connection with the occurrence of the anomaly and associated prompt. The example alert report 114 of FIG. 2 includes alert status data 209 identifying each alert 112 as being open or closed in connection with review and/or resolution of the alert 112. In the example of FIG. 2, the alert report 114 includes model review status data 210, which indicates whether the alert has been automatically closed in response to a machine-learning analysis, as disclosed herein. The alert report 114 can include other types of data, such as time spent addressing the alert, a country in which the store that is the subject of the analysis is located, and/or other location identifiers.

In some examples, the alert(s) 112 are indicative of an audit not being conducted correctly due to, for example, auditor error (e.g., the auditor not following prompts generated by the store audit application 106), in-store issues (e.g., missing products), and/or issues with the data being collected (e.g., data collected for the wrong product). Such anomalies affect the accuracy of the store-level analysis performed using the audit data and may warrant an auditor revisiting the store 104 to perform the audit again. In some examples, the store audit application 106 and/or the store audit analysis circuitry 110 generates the alert(s) 112 based on an anomaly in connection with the data collection, however, the anomaly does not warrant another visit to the store 104 to perform the audit again. For example, an alert 112 may be generated if a photo of an item is captured in a landscape format when the store audit application 106 requests that the photo be captured in a vertical format. However, because the requested data is collected, such an alert does not rise to a severity level such that the in-store audit should be performed again. In the example alert report 114, a severity level 212 is assigned to each alert 112 based on predefined rule(s) or user input(s). The rule(s) indicate the level of severity associated with the alert 112. The severity level 212 is a numerical value (e.g., a value of one to ten), where a larger numerical value represents a greater severity of the alert 112 and, thus, a greater likelihood that the audit was conducted improperly and should be re-performed.

Returning to FIG. 1, the store audit analysis circuitry 110 includes alert analysis circuitry 116 that receives the alert report(s) 114 as input(s) and executes machine learning models 118 to identify the alert(s) 112 in the alert report(s) 114 that should invoke an action and the alert(s) 112 that do warrant an action or response. The example alert analysis circuitry 116 of FIG. 1 executes a supervised machine learning model and an unsupervised machine learning model using the alert report(s) 114 as inputs to both models. In the example of FIG. 1, the machine learning models 118 are trained by training circuitry 120. The alert analysis circuitry 116 uses outputs from both models to generate an output that predicts whether an alert warrants action (e.g., generate an instruction for an audit to be re-performed; output training materials to the auditor via the mobile application 106; close the alert if no action is warranted; flag the alert for further review). Although in the example of FIG. 1, the store audit analysis circuitry 110 includes alert analysis circuitry 116, in other examples, the alert analysis circuitry 116 may be implemented separately from the store audit analysis circuitry 110 and in communication therewith.

In response to the machine-learning analysis performed by the alert analysis circuitry 116, the store audit analysis circuitry 110 can generate one or more output(s) with respect to the alert(s) 112. In some examples, the output(s) generated by the store audit analysis circuitry 110 can be transmitted and displayed in the form of messages or prompts by the store audit application 106 on the electronic device 102. For example, responsive to the machine-learning analysis of alerts associated with a first in-store audit, the store audit analysis circuitry 110 can generate instructions for a store to be re-audited and transmit the instructions to a store audit application 106 on an electronic device 102 associated with a second auditor, where the second auditor is different than the first auditor who performed the first in-store audit. In some examples, responsive to the machine-learning analysis, the store audit analysis circuitry 110 causes the store audit application 106 on the electronic device 102 associated with the first auditor to present training materials for performing audits.

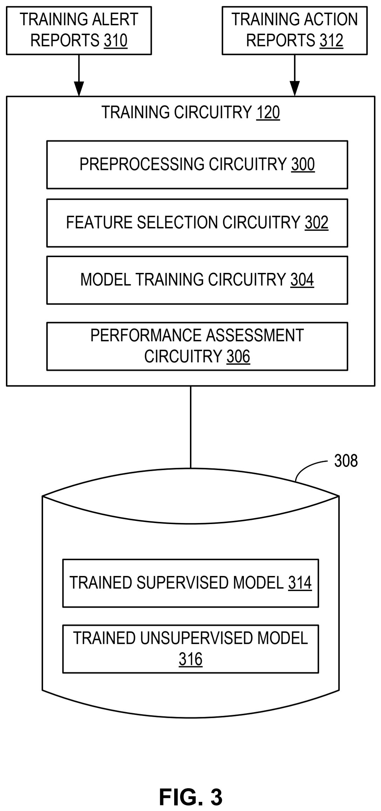

FIG. 3 is a block diagram of an example implementation of the training circuitry 120 of FIG. 1 to train machine learning models for use in analyzing alerts associated with store-level analyses. The training circuitry 120 of FIG. 3 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the training circuitry 120 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

The example training circuitry 120 of FIG. 3 includes preprocessing circuitry 300, feature selection circuitry 302, model training circuitry 304, and performance assessment circuitry 306. The training circuitry 120 of FIG. 3 is in communication with a database 308.

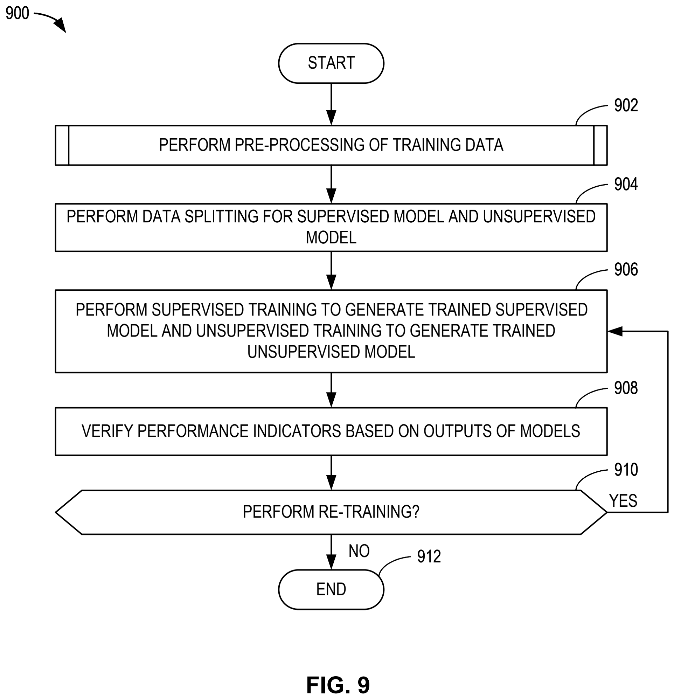

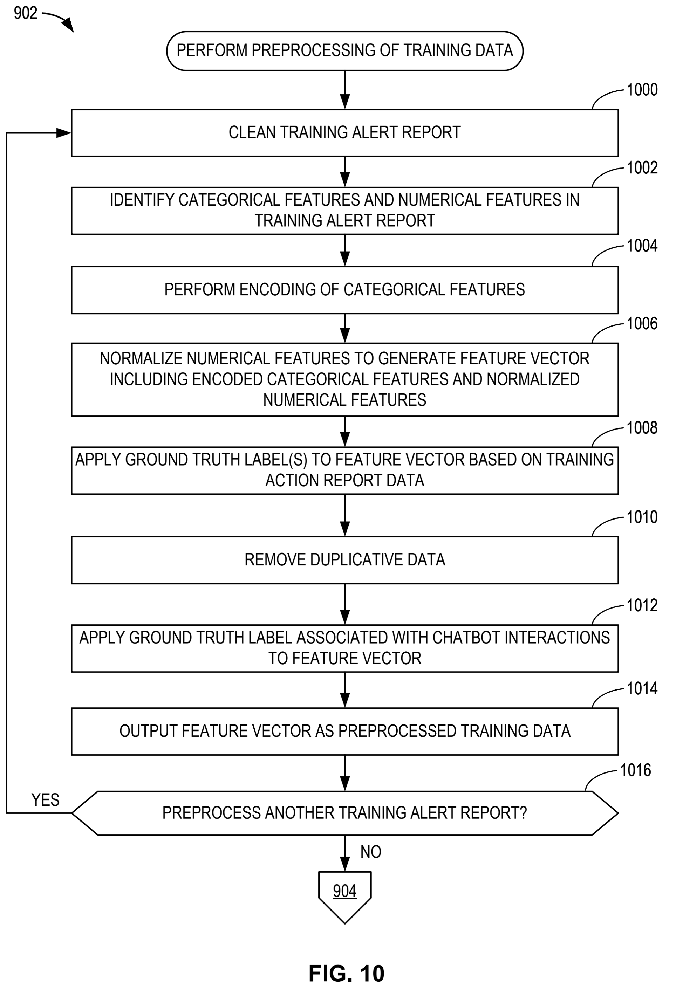

In some examples, the preprocessing circuitry 300 is instantiated by programmable circuitry executing preprocessing instructions and/or configured to perform operations such as those represented by the flowchart(s) of FIGS. 9 and/or 10. In some examples, the feature selection circuitry 302 is instantiated by programmable circuitry executing feature selection instructions and/or configured to perform operations such as those represented by the flowchart(s) of FIGS. 9 and/or 10. In some examples, the model training circuitry 304 is instantiated by programmable circuitry executing model training instructions and/or configured to perform operations such as those represented by the flowchart of FIG. 9. In some examples, the performance assessment circuitry 306 is instantiated by programmable circuitry executing performance assessment instructions and/or configured to perform operations such as those represented by the flowchart of FIG. 9.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, supervised deep learning models such as Multi-Layer Perceptron (MLP) neural networks are used. Using MLP model(s) reduces computational footprint (e.g., reduced training speed and reduced memory consumption as compared to transformer-based models, can be trained on CPU hardware without a GPU, etc.), which reduces operational costs and environmental impact (e.g., due to decreased electricity consumption and power demands). Also, in examples disclosed herein, unsupervised models, such as unsupervised decision tree-based models (e.g., Isolation Forests) are used.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Training is performed using hyperparameters that control how the learning is performed (e.g., a learning rate, a number of layers to be used in the machine learning model, etc.). In some examples re-training may be performed. Training is performed using training data. Once training is complete, the model is deployed for use as an executable construct that processes an input and provides an output based on the network of nodes and connections defined in the model.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

The preprocessing circuitry 300 of the example training circuitry 120 of FIG. 3 prepares data that is used to train the machine learning models to perform alert detection and analysis. In the example of FIG. 3, the preprocessing circuitry 300 receives training alert reports 310. The training alert reports 310 include historical alert reports generated by the store audit application 106 and/or the store audit analysis circuitry 110. The training alert report(s) 310 can be the same or substantially the same as the example alert report 114 of FIG. 2. Also, the preprocessing circuitry 300 receives training action reports 312. The training action reports 312 identify actions historically taken in response to the alerts 112 in the training alert reports 310. The use of historical alert data and historical action data can minimize false positives with respect to analysis of alerts by the machine learning models.

FIG. 4 illustrates an example action report 312 that can be used for training the machine learning models. The example action report 312 of FIG. 4 includes actions taken in connection with particular SLA identifiers 206 (where the SLA identifiers 206 correspond to respective alerts 112 in a training alert report 310). The action report 312 includes action type data 400, which indicates a type of action initiated in response to a given alert 112. The action types can include, for example, correcting the input data, providing training and/or training materials to the auditor(s) associated with the alert 112, and/or supervising the performance of an audit. The action report 310 can include comments or descriptions 402 written by, for example, a user in connection with a review of a given alert 112. The action report 400 can include other types of data such as country identifiers, alert status, store identifiers, etc.

Returning to FIG. 3, the feature selection circuitry 302 of FIG. 3 determines features for each SLA identifier 206 in a training alert report 310. The features include categorical data, such as the type of alerts associated with each SLA ID (where more than one alert can be associated with an SLA ID, thereby indicating multiple alerts associated with a store-level analysis). The features also include numerical data, including the total number of alerts, the cumulative severity of a given alert (e.g., based on the severity level values 212 in the training alert report 310). In disclosed examples, the combination of categorical and numerical features identifies anomaly patterns and their quantitative severity, thereby creating a more complete representation of the alerts 112. Also, each feature identified by the feature selection circuitry 302 represents a specific aspect of audit behavior that domain experts have identified as potentially indicative of anomalies. Thus, the analysis performed by the feature selection circuitry 302 incorporates domain knowledge. As disclosed herein, the example feature selection circuitry 302 applies normalization techniques to the numerical features to provide consistency in the data across, for example, store environments, thereby reducing biases and improving the accuracy of the analyses. In some examples, prior to performing the feature extraction, the preprocessing circuitry 300 and/or the feature selection circuitry 302 cleans the data in the training alert reports 310 to, for example, remove duplicate data, incomplete data, or other noise in the data (e.g., row cleaning).

As disclosed herein, the feature selection circuitry 302 extracts categorical features and numerical features from the training alert reports 310 for each SLA identifier 206. The categorical features indicate the presence of particular audit anomalies (e.g., different alert types). Some of the categorical features identify particular entities (e.g., store(s), item(s)). Example categorical features identified by the feature selection circuitry 302 for a given SLA identifier 206 and associated training alert report(s) 310 can include:
Abnormal Store Behavior
AbnormalAuditDuration-High
AbnormalAuditDuration-Low
HighNewItems
HighItemsNotSelectedViaScanning
LowPurchasetoTotalSKU
SalesFluctuation
StoreAuditedOutsideScheduledDay
StoreOpenedOutsideGEOCoordinates
StoreTransfer-complete
AbnormalItemCount
AuditDataCleared
Category Missed
DelayedAudit
ItemMissed
StoreOpenAndClosedGeoCoordinatesMismatch
StoreUnusualAuditTime
LowStockl toTotalSKU
PriceOutlier
StoreTransferred-duplicate
ElapseddayAudit
HighValidationDuration
NegativeSales
StoreNewlyRecruited
StoreTempLost
StorePermanentlost
ZeroNewSKUs
Store Partial Audit
ElapsedDayAudit
StoreClosed
StoreClosureInfo
StorePartialAudit
StorePermanentLost
StoreTransferred-Complete
StoreTransferred-Duplicate
STORE
ITEM

In the example of FIG. 3, the categorical features, which represent distinct alert types, are encoded by the feature selection circuitry 302 using, for example, one-hot encoding (e.g., converting categorical features into binary numerical values such as "1" for presence of an alert and "0" if the alert is not present). As a result of the encoding, each alert type is independently represented in a numerical format that is understood by machine learning algorithms. Also, by encoding alert presence, the machine learning models can capture patterns in audit inefficiencies or recurring operational issues. An individual alert may indicate an isolated issue; however, patterns of co-occurring alerts may be indicative of underlying systemic problems that warrant intervention. For example, a store where auditors frequently report delayed audits, unusually short or long audit durations, or abnormal scanning behavior may indicate systemic inefficiencies or deviations from standard procedures that require further investigation. Thus, the encoding of categorical features enables the machine learning models to detect interconnected patterns and distinguish between random fluctuations and genuine anomalies requiring action. Thus, the encoding of alert types as categorical features by feature selection circuitry 302 enables the machine learning models to learn relationships between seemingly unrelated audit behaviors. Thus, as compared to a rules-based approach (e.g., looking at alerts in isolation and/or alert counts alone), the machine learning models are trained by the training circuitry 120 of FIG. 3 to detect patterns in the alert data.

The numerical features extracted by the feature selection circuitry 302 provide quantitative measurements of alert patterns, capturing the magnitude and distribution of anomalies rather than just their presence. For example, for a given SLA identifier 206 and associated training alert report(s) 310, the feature selection circuitry 302 can identify the following numerical features that quantify different aspects of anomaly patterns or unexpected auditor behavior:
count_alerts
sum_severity
mean_severity
max_severity
min_severity
chatbot_status_percentage
diff_count_alerts
diff_sum_severity

In the example numerical features listed above, the "count_alerts" feature represents a total number of distinct alerts triggered in connection with visits to the store and identified in the training alert report(s) 310 for a given SLA identifier 206. The "count_alerts" feature provides insight into the breadth of anomalous behaviors associated with audits of the store. The "count_alerts" feature enables the machine learning models to distinguish between single-point anomalies and more systemic issues across multiple alert types. This distinction enables the machine learning models to determine appropriate response protocols.

The "sum_severity" feature represents a total severity score across alerts associated with visits to the store and identified in the training alert report(s) 310 for a given SLA identifier 206. The "sum_severity" feature is a measure of the overall impact of detected anomalies and enables the machine learning models to prioritize cases where multiple low-severity alerts may collectively indicate a more severe issue. High values of the "sum_severity" feature correlate with situations warranting attention. By computing aggregated severity scores, the machine learning models can detect deviations such as sudden increases in high-severity alerts that may signal systemic failures or irregular fluctuations in severity metrics, which can indicate inconsistencies in how audits are conducted across different stores.

The "mean_severity" feature represents an average of severity scores across alerts associated with visits to the store and identified in the training alert reports 310 for a given SLA identifier 206. The "mean_severity" feature identifies instances where a severity level deviates from expected pattern(s) and enables the machine learning models to detect shifts in alert importance that might otherwise be masked by focusing only on total severity or alert counts.

The "max_severity" feature identifies the highest severity level among the alerts in the training alert reports 310 for a given SLA identifier 206. The "max_severity" feature ensures that high-impact anomalies are not diluted when averaged with less severe alerts.

The "min_severity" feature identifies the lowest severity level among the alerts in the training alert reports 310 for a given SLA identifier 206. The "min_severity" feature establishes a baseline that constitutes an expected minor alert issue. Unexpected changes in the baseline or "min_severity" feature may precede more significant anomalies. Thus, the "min_severity" feature can be recogized as an early warning indicator by the machine learning models.

For example, a training alert report 310 for a store may include the following alerts associated with the same SLA identifier 206 and corresponding assigned severity levels (where the alerts are represented below as categorical features):
CategoryMissed = severity 2
StoreOpenedOutsideGEOCoordinate = severity 7
StorePartialAudit = severity 4
In this example, the feature selection circuitry 302 computes the numerical features used as model inputs including sum_severity (2 + 7 + 4 = 13), mean_severity (13 / 3 ≈ 4.33), max_severity (= 7), and min_severity (= 2).

The "chatbot_status_percentage" feature tracks the percentage of alerts associated with a given SLA identifier 206 where auditors provided responses to automated chatbot prompts on their electronic devices 102. The "chatbot_status_percentage" feature serves as an indicator of auditor engagement with detected anomalies. Low response chatbot rates can serve as a flag that influences the machine learning analysis.

The "diff_count_alerts" feature measures changes in alert frequency compared to a prior time period (e.g., the previous month) for a given SLA identifier 206. Thus, this feature detects patterns in alerts for in-store visits over time. The machine learning models can use this temporal feature to distinguish between persistent systemic issues and temporary fluctuations (which may be associated with seasonal retail audit patterns).

The "diff_sum_severity" feature tracks how the total severity of alerts associated with a given SLA identifier 206 changes over time (e.g., month-over-month) and can be used by the machine-learning models to detect escalating or improving conditions with respect to alerts for in-store visits to the store. The "diff_sum_severity" feature enables the machine learning model(s) to detect degrading audit quality, which can prompt proactive intervention (e.g., auditor training).

In the example of FIG. 3, the feature selection circuitry 302 normalizes the numerical features (e.g., the severity metrics (sum_severity, mean_severity, max_severity, min_severity); the alert counts (count_alerts); the severity variations over time (e.g., diff_sum_severity)) to provide comparability across different store environments. Thus, rather than relying only on raw alert counts, the feature selection circuitry 302 extracts metrics that capture temporal trends, such as trends in severity over a time period (e.g., month-to-month). As a result, the machine learning models are trained to anticipate risks in connection with alerts, which reduces a number false negatives in classifications generated by the trained machine learning models and improves model response efficiency.

The feature selection circuitry 302 generates a numerical feature vector having a dimensionality corresponding to the encoded categorical features and the normalized numerical features determined from the training alert reports 310 (e.g., *n* = 45, corresponding to 37 example categorical features and 8 example numerical features listed above). After the feature selection circuitry 302 determines (e.g., extracts, computes) the features from the training alert reports 310 and processes the features (e.g., encodes the categorical features, normalizes the numerical features), the preprocessing circuitry 300 provides ground truth labels for training the machine learning models using the training action reports 312. In the example of FIG. 3, the preprocessing circuitry 300 identifies an alert 112 based on the SLA identifier 206 in the training alert report(s) 310 and the corresponding SLA identifier 206 in the training action report(s) 312. The preprocessing circuitry 300 determines if an action is associated with a given alert 112 in the training action report(s) 312 (as determined by cross-referencing the SLA identifier 206 in the training alert report(s) 310 and the training action report(s) 312). If the preprocessing circuitry 300 determines that an action is associated with the alert 112, then the preprocessing circuitry 300 assigns a ground truth label of "1" to the categorical feature in the feature vector corresponding to the alert. If the preprocessing circuitry 300 determines that an action is not associated with a given alert 112 (e.g., because an action has historically not been performed in response to the alert), then the preprocessing circuitry 300 assigns a ground truth label of "0" to the corresponding categorical feature. Thus, the preprocessing circuitry 300 merges the training alert reports 310 and the training action reports 312 using the SLA identifier 206 to generate training data that identifies if an action should be performed in response to an alert.

After merging the training alert reports 310 and the training action reports 312, the example preprocessing circuitry 300 identifies training data with identical feature values but different ground truth labels (e.g., indicating that an action was performed in response to an alert in one instance but not another instance). The preprocessing circuitry 300 removes duplicates from the training data with identical feature values but different ground truth labels. In the example of FIG. 3, the preprocessing circuitry 300 retains training data with the most frequently occurring ground truth label for consistency and accuracy in training the models with respect to determining if an alert warrants an action.

Also, the preprocessing circuitry 300 assigns a ground truth label of "1" to the training data (indicating that an action should be performed in response to an alert) if the alert(s) 112 in the training alert reports 310 indicate that an auditor failed to respond to the chatbot application 108 during a store visit. Failing to respond to the chatbot application 108 can be considered a high-severity issue. Thus, by applying the ground truth label of "1" with respect to chatbot interactions, the machine learning models are trained to consider use of the chatbot application in evaluating the alerts. As a result, the machine learning models learn that data indicating that an auditor failed to respond to the chatbot should be treated as an alert that warrants action. Prioritizing use of the chatbot application 108 in connection with the alert analysis can maintain the overall effectiveness of the chatbot application 108 in-store audit process.

The model training circuitry 304 of the example training circuitry 120 uses the preprocessed data in the form of the numerical feature vector (including the ground truth labels) to train the machine learning models. In the example of FIG. 3, the model training circuitry 304 trains a supervised model and an unsupervised model. Accordingly, the model training circuitry 304 implements different data splitting strategies for the respective supervised and unsupervised models.

For the supervised model, the model training circuitry 304 splits the preprocessed training data into two data sets, namely, a training set and a validation data. Also, in this example, training data from a particular time period (e.g., the last month) is reserved for testing. As a result of the data splitting, the model training circuitry 304 generates a seen set (training data) and two unseen data splits (validation and test sets). Such data splitting for the supervised model enables the model training circuitry 304 to implement regularization techniques (e.g., early stopping) to prevent the supervised machine learning model from overfitting. The model training circuitry 304 trains a machine learning model using supervised training to generate a trained supervised model 314. The supervised model 314 is stored in the database 308. The supervised model 314 may then be executed by the alert analysis circuitry 116 of FIG. 1.

For the unsupervised model, the model training circuitry 304 trains the machine learning model using the training set and validation set together. Because the unsupervised model does not rely on ground truth labels (as compared to the supervised training), regularization techniques are not typically applied to the unsupervised model. Accordingly, performing unsupervised training with more data allows the model to learn data distributions and detect anomalies or rare cases. As a result of the unsupervised training, a trained unsupervised model 316 is generated. The unsupervised model 316 is stored in the database 308. The unsupervised model 316 may then be executed by the alert analysis circuitry 116 of FIG. 1.

During training, the respective models 314, 316 learn model weights (w) and bias (b). In the supervised model 314, the weight and bias parameters are adjusted based on historical decisions by users (e.g., quality control reviewers) who reviewed in-store visit data and associated alerts. During training, the supervised model 314 iteratively updates the model weights (w) and bias (b) so that the predictions by the supervised model 314 align with how alerts associated with past store visits have historically been classified. In the unsupervised model 316, the weight and bias parameters are learned from the statistical distribution of the training data. The weight and bias parameters for the unsupervised model 316 reflect expected auditor behavior so that the unsupervised model 316 can detect deviations or outliers, namely, patterns that suggest the in-store visit was not conducted in the usual way. In the case of both the supervised model 314 and the unsupervised model 316, the learned weight and bias parameters determine how the input features (e.g., the severity-based numerical features) are transformed into a final SLA score when the models 314, 316 are deployed.

After training the supervised model 314 and the unsupervised model 316, the performance assessment circuitry 306 of the example training circuitry 120 of FIG. 3 evaluates the performance of the trained models 314, 316 based on the model outputs. For example, the performance assessment circuitry 306 compares the predictions generated by the respective models 314, 316 with ground truth data. The performance assessment circuitry 306 calculates one or more metrics or performance indicators to evaluate the models 314, 316. For example, the performance assessment circuitry 306 calculates metrics that assess accuracy (e.g., overall correctness of a model's predictions); precision (e.g., proportion of true positive predictions among all positive predictions); recall (e.g., a model's ability to identify all relevant instances); F1 Score (e.g., representing a balance between precision and recall); and Area Under the Curve (e.g., reflecting a model's ability to distinguish between classes). In some examples, the performance assessment circuitry 306 evaluates combined outputs of the models 314, 316 (e.g., to identify consistency between the predictions of each model 314, 316). In some examples, one or more of the supervised model 314 or the unsupervised model 316 is re-trained if one or more of the performance metrics are not satisfied. Additionally or alternatively, re-training can be performed based on differences between model prediction(s) and decision(s)from a manual review of the alerts 112 and/or new alerts 112 or alert patterns identified by, for example, the unsupervised model 316 during deployment of the models 314, 316.

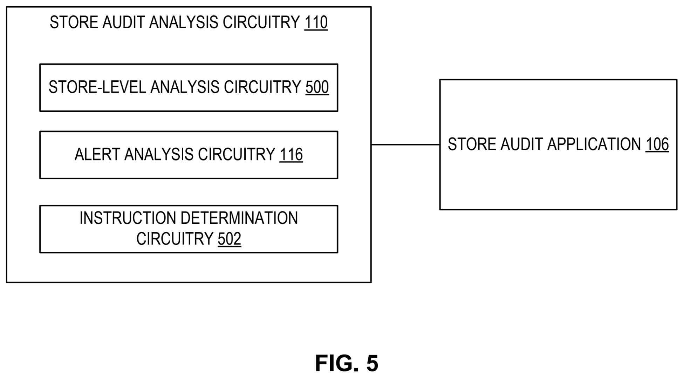

FIG. 5 is a block diagram of an example implementation of the store audit analysis circuitry 110 of FIG. 1 to perform store-level analysis for a store based on data generated by auditors during in-store visits. The store audit analysis circuitry 110 of FIG. 5 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the store audit analysis circuitry 110 of FIG. 5 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 5 may, thus, be instantiated at the same or different times. Some or all of the circuitry of FIG. 5 may be instantiated, for example, in one or more threads executing concurrently on hardware and/or in series on hardware. Moreover, in some examples, some or all of the circuitry of FIG. 5 may be implemented by microprocessor circuitry executing instructions and/or FPGA circuitry performing operations to implement one or more virtual machines and/or containers.

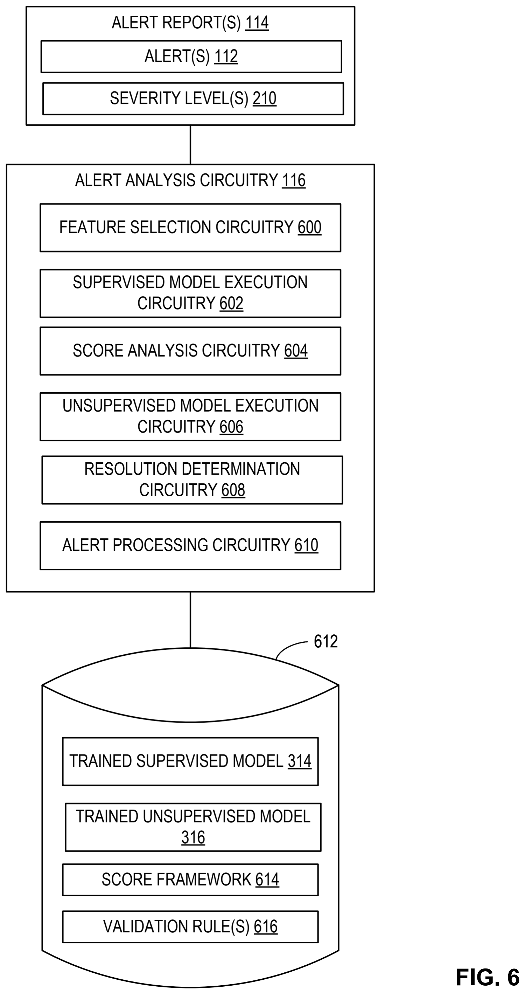

The example store audit analysis circuitry 110 of FIG. 5 includes store-level analysis circuitry 500, the alert analysis circuitry 116, and instruction determination circuitry 502. The alert analysis circuitry 116 will be discussed in connection with FIG. 6.

The store-level analysis circuitry 500 of the example store audit analysis circuitry 110 of FIG. 5 generates store-level analysis metrics related to stores or other retail locations based on data collected during in-store visits via the store audit application 106. For example, the store-level analysis circuitry 500 can generate sales data and/or inventory data based on the data collected during the in-store visits.

The instruction determination circuitry 502 of the example store audit analysis circuitry 110 of FIG. 5 generates instructions that are output to, for example, the store audit application 106 to cause the store audit application 106 to, for example, display a message, present particular content (e.g., training materials), or take other actions. In some examples, the instruction determination circuitry 502 generates instructions based on the analysis performed by the alert analysis circuitry 116. For example, the instruction determination circuitry 502 can generate instructions to cause messages to be output via the store audit application 106, such as a message for an auditor to visit a store to re-perform an audit. In some examples, the instruction determination circuitry 502 generates instructions to cause audit training materials to be presented via the store audit application 106.

FIG. 6 is a block diagram of an example implementation of the alert analysis circuitry 116 of FIGS. 1 and 5 to perform machine learning analysis of alerts generated in connection with store-level analysis (e.g., resulting from an in-store visit or audit). The alert analysis circuitry 116 of FIG. 6 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the alert analysis circuitry 116 of FIG. 6 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 6 may, thus, be instantiated at the same or different times. Some or all of the circuitry of FIG. 6 may be instantiated, for example, in one or more threads executing concurrently on hardware and/or in series on hardware. Moreover, in some examples, some or all of the circuitry of FIG. 6 may be implemented by microprocessor circuitry executing instructions and/or FPGA circuitry performing operations to implement one or more virtual machines and/or containers.

The example alert analysis circuitry 116 of FIG. 6 includes feature selection circuitry 600, supervised model execution circuitry 602, score analysis circuitry 604, unsupervised model execution circuitry 606, resolution determination circuitry 608, and alert processing circuitry 610. The example alert analysis circuitry 116 of FIG. 6 is in communication with a database 612, which stores the trained supervised model 314 and the trained unsupervised model 316. In some examples, the database 308 of FIG. 3 and the database 612 of FIG. 6 are the same database.

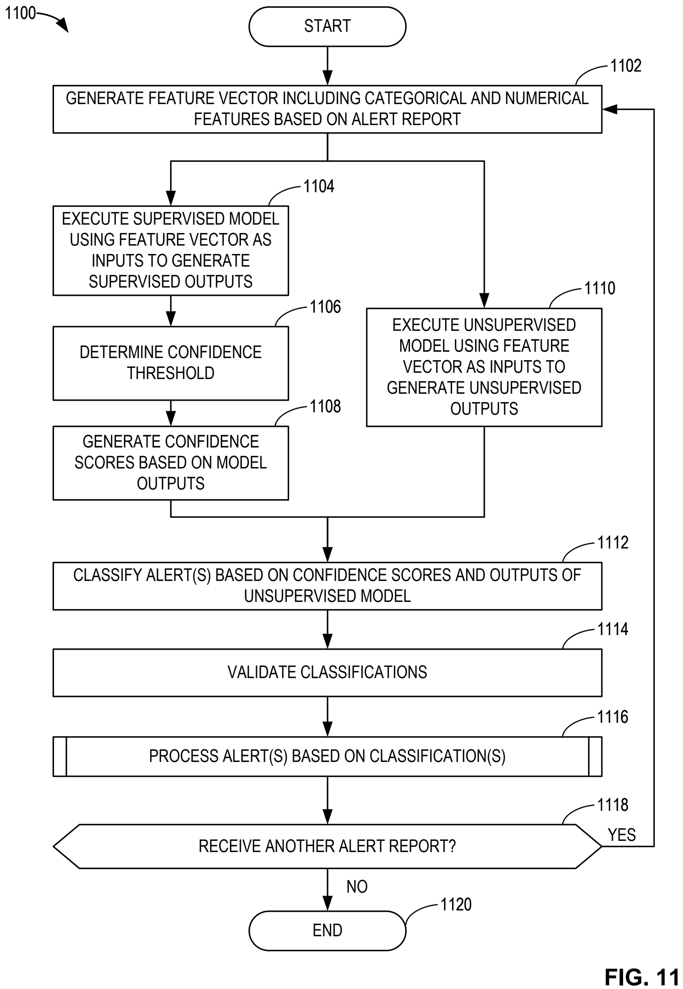

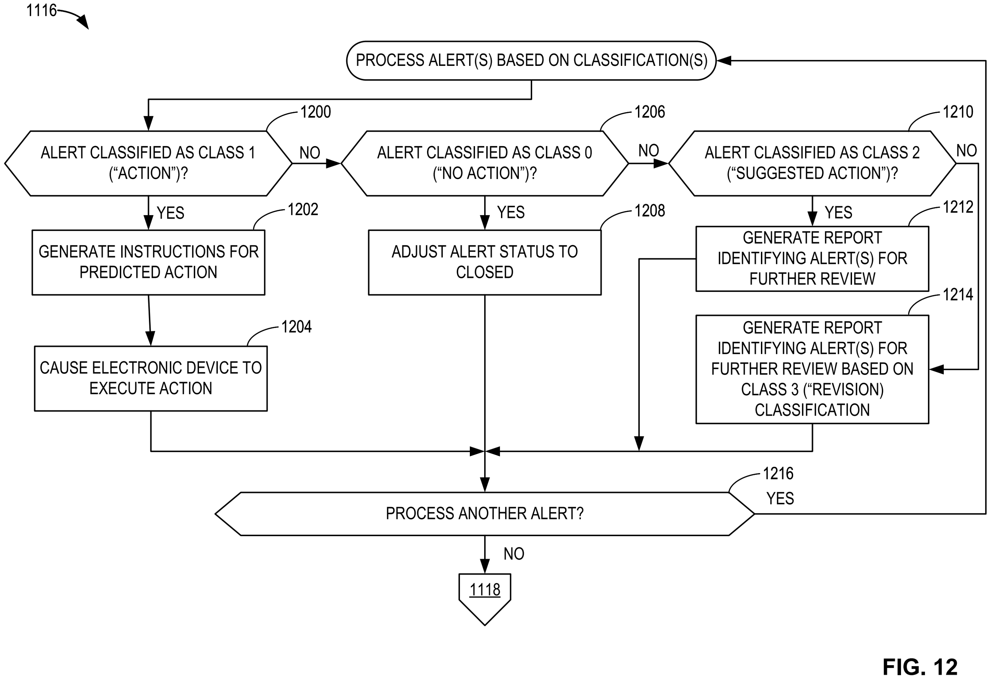

In some examples, the feature selection circuitry 600 is instantiated by programmable circuitry executing feature selection instructions and/or configured to perform operations such as those represented by the flowchart of FIG. 11. In some examples, the supervised model execution circuitry 602 is instantiated by programmable circuitry executing supervised model execution instructions and/or configured to perform operations such as those represented by the flowchart of FIG. 11. In some examples, the score analysis circuitry 604 is instantiated by programmable circuitry executing score analysis instructions and/or configured to perform operations such as those represented by the flowchart of FIG. 11. In some examples, the unsupervised model execution circuitry 606 is instantiated by programmable circuitry executing unsupervised model execution instructions and/or configured to perform operations such as those represented by the flowchart of FIG. 11. In some examples, the resolution determination circuitry 608 is instantiated by programmable circuitry executing resolution determination instructions and/or configured to perform operations such as those represented by the flowchart of FIG. 11. In some examples, the alert processing circuitry 610 is instantiated by programmable circuitry executing resolution determination instructions and/or configured to perform operations such as those represented by the flowchart(s) of FIGS. 11 and/or 12.

The feature selection circuitry 600 of the example alert analysis circuitry 116 of FIG. 1 receives (e.g., from the store audit application 106) an alert report 114 including alert(s) 112 and associated severity level(s) 212. The feature selection circuitry 600 identifies (e.g., determines, extracts, computes) categorical features and numerical features for a given SLA identifier 206 in the alert report 114. The feature selection circuitry 600 identifies the categorical features and numerical features substantially as disclosed in connection with the feature selection circuitry 302 of the example training circuitry 120 of FIG. 3. For example, the feature selection circuitry 600 identifies a presence or absence of predefined categorical features (e.g., the 37 categorical features discussed in connection with FIG. 3) in the alert report 114 and encodes the categorical features into numerical values (e.g., using one-hot encoding to assign values of "1" or "0"). Also, the feature selection circuitry 600 determines the numerical features (e.g., the eight numerical features discussed in connection with FIG. 3) using, for example, the severity levels 212 associated with the respective alerts 112. The feature selection circuitry 600 normalizes the numerical features as disclosed in connection with FIG. 3. As a result of preprocessing the alert report 114, the feature selection circuitry 600 generates a numerical feature vector (e.g., having dimensionality n = 45 corresponding to the total number of categorical features and numerical features defined for evaluation). The numerical feature vector includes the encoded categorical features and the normalized numerical features.

FIG. 7 illustrates a portion of an example numerical feature vector 700 generated by the feature selection circuitry 600. The example numerical feature vector 700 of FIG. 7 includes example encoded categorical features 702 (where "1" indicates a presence of the categorical feature or alert type and "0" indicates that the alert type is not present in the alert report 114 for a given SLA identifier 206). The example numerical feature vector 700 of FIG. 7 includes example normalized numerical features 704 based on, for example, the severity levels assigned to the alerts 112 in the alert report 114 for the given SLA identifier 206. The example numerical feature vector 700 can include additional categorical features 702 and/or numerical features 704 than shown in FIG. 7.

Returning again to FIG. 6, the numerical feature vector generated by the feature selection circuitry 600 for a given SLA identifier 206 in the alert report 114 is provided as inputs to the trained supervised model 314 and the trained unsupervised model 316. The supervised model execution circuitry 602 executes the trained supervised model 314 using the numerical feature vector to generate supervised outputs in the form of raw scores. The raw scores represent predictions by the supervised model 314 that a given alert 112 in the alert report 114 warrants an action (e.g., store supervision, training) and, thus, should be classified as belonging to an action class. Put another way, the scores output by the supervised model reflect a likelihood that a visit to a store was not conducted improperly.

The score analysis circuitry 604 of the example alert analysis circuitry 116 of FIG. 2 transforms the raw scores output by the supervised model 314 using a probability function. For example, the score analysis circuitry 604 executes a sigmoid activation function: $p = \frac{1}{1 + {e}^{- \left(w⋅x+b\right)}}$ where *w̅* represents the model weights, *x̅* is the feature vector containing the transformed alert attributes, *b* is the bias term, and *p* ∈ (0,1) represents the likelihood that a given alert 112 belongs to the action class, thereby indicating that the alert warrants action.

In the example of FIG. 6, rather than applying a default threshold (e.g., 0.5) for evaluating the likelihood that an alert warrants action, which may lead to false negatives with respect to alerts that warrant action, the score analysis circuitry 604 performs score rescaling and/or optimization to transform the raw probability outputs into calibrated confidence metrics. For example, the score analysis circuitry 604 determines a rescaled (e.g., optimal) threshold *T* by generating a Receiver Operating Characteristic (ROC) curve that reflects performance of the supervised model 314 and identifying a point in the ROC curve that maximizes the difference between a true positive rate (TPR) and a false positive rate (FPR). In some examples, the score analysis circuitry 604 selects the rescaled threshold *T* using a statistic such as Youden's J statistic, which represents a maximum vertical distance from the ROC curve to a diagonal line. As a result, the score analysis circuitry 604 identifies the threshold *T* that maximizes the sum of sensitivity and specificity, as represented by the expression: $T = argmax \left(TPR-FPR\right)$ where TPR and FPR are derived from a confusion matrix or error matrix that compares the predictions of the supervised model 314 against ground truth labels.

The score analysis circuitry 604 executes a rescaling algorithm to apply an adjustment to or otherwise transform the probability scores into confidence metrics. For example, the score analysis circuitry 604 executes the rescaling algorithm as follows: $\begin{matrix}For scores < T : \\ scores _ rescaled = 0.9 ∗ \left(\frac{\left(scores-T\right)}{T}\right)\end{matrix}$ $\begin{matrix}For scores > = T : \\ scores _ rescaled = 0.9 + \left(1.0-0.9\right) ∗ \left(\frac{\left(scores-T\right)}{\left(1-T\right)}\right)\end{matrix}$ In the above example, the rescaling formula transforms the threshold T to a reference point of 0.9 on a confidence scale. Scores above the raw threshold are rescaled to span from 0.9 to 1.0, thereby creating a confidence metric that indicates a likelihood that a visit to a given store was conducted improperly or otherwise resulted in data that will affect (e.g., negatively affect) the accuracy of the store-level analysis.

In examples in which the supervised model 314 predicts that an alert 112 warrants an action (e.g., as represented by the score generated by the supervised model 314 for that alert), the supervised model 314 predicts the action to be performed to address (e.g., resolve) the alert. For example, in response to predicting that a given alert 112 warrants action, the supervised model 314 can generate a request for additional store-level data (e.g., where the request can include an instruction for the in-store audit to be re-performed) or generate an instruction for training to be provided via the mobile application 106. As disclosed herein, the instructions can be output to the store audit application 106 via the instruction determination circuitry 502 of the store audit analysis circuitry 110 of FIG. 5.

The unsupervised model execution circuitry 606 of the example alert analysis circuitry 116 of FIG. 6 executes the trained unsupervised model 316 using the numerical feature vector as an input to generate unsupervised outputs. The unsupervised outputs generated by the unsupervised model 316 reflect a degree to which a visit to a store deviated from expected auditor behavior. In some examples, the unsupervised outputs identify anomalies that may not be recognized by the supervised model 314 because, for example, the alert identified by the unsupervised model 316 has not previously appeared in the data used to train the supervised model 314. For example, if an anomaly identified by the unsupervised model 316 was not labelled or otherwise included in the historical alert data used to train the supervised model 314, then the supervised model 314 may not recognize the anomaly.

The resolution determination circuitry 608 of the example alert analysis circuitry 116 evaluates the outputs of the supervised model 314 and the unsupervised model 316 to classify the alerts 112 in the alert report 114. In the example of FIG. 3, the resolution determination circuitry 608 uses a score framework 614 to classify an alert 112 based on whether action is warranted, whether the alert 112 should be further reviewed (e.g., manual review), or whether the alert 112 can be closed in the alert report 114 without further action.

The score framework 614 is stored in the database 612. The score framework, which can be defined by user inputs, defines an alert classification scheme based on the rescaled scores generated from execution of the supervised model 314 and the supplemental analysis provided by execution of the unsupervised model 316. For example, the score framework 614 can define the following alert classifications based on the rescaled scores from the supervised model analysis and/or the unsupervised outputs:
Class 1: Action if rescaled_score ≥ 0.9
Class 2: Suggested Action if 0.6 ≤ rescaled_score < 0.9
Class 3: Revision if 0.4 ≤ rescaled_score < 0.6 or if unsupervised model identifies anomaly (i.e., anomaly = 1)
Class 0: No Action if rescaled_score < 0.4 and unsupervised model predicts no action warranted
The values of the above example score framework 614 can differ from the example above (e.g., based on the ROC analysis).

In the above example score framework 614 the Class 1 ("Action") classification indicates that an alert 112 warrants an action. As disclosed herein, when the supervised model 314 outputs a confidence score that indicates high confidence by the model 314 that the alert 112 warrants an action, the model 314 can assign an action to the alert (e.g., instruct the audit to be re-performed, instruct training materials to be output).

The Class 2 ("Suggested Action") classification includes instances where the supervised model 314 suggests a possible action in view of the alert 112 but the rescaled score does not meet the threshold for Class 1 classification. In this example, the alert can be flagged for further review (e.g., manual review) because of the uncertainty or statistical deviation associated with the prediction of the supervised model 314.

The Class 3 ("Revision") classification includes instances in which the outputs of the supervised model 314 and the unsupervised model 316 deviate from each other. For example, the supervised model 314 may classify the alert as low risk (e.g., indicating that the alert does not warrant a response), however, the unsupervised model 316 may classify the alert as an anomaly (e.g., a previously unseen alert). Similar to the Class 2 classification, alerts classified as Class 3 are flagged for further review (e.g., due to the Class 3 alerts reflecting new alert patterns). In some examples, the alerts that the unsupervised model 316 classifies as an anomaly are used as additional training data for the supervised model 314.

The Class 0 ("No Action") classification includes instances where the supervised model 314 predicts with high confidence that no action is warranted in response to the alert and the unsupervised model also predicts that no action is warranted. In such examples, the alert can be automatically closed (e.g., by the alert processing circuitry 610) such that the status of alert 112 in the alert report 114 changes from an open status to a closed status (e.g., update the alert status data 209 in the alert report 114, update the model review status data 210 in the alert report 114 to indicate that the alert has been closed as result of the machine learning analysis).

The resolution determination circuitry 608 assigns the classifications based on the outputs of the supervised model 314 and the unsupervised model 316. In some examples, the resolution determination circuitry 608 applies validation rule(s) 616 to confirm or otherwise validate the classification. The validation rule(s) 616 are stored in the database 612 and define operational procedures for processing alert(s) (e.g., based on domain knowledge). In some examples, the validation rule(s) 616 may override the predictions by the supervised model 314. For example, based on the outputs of the supervised model 314, the resolution determination circuitry 608 may classify an alert 112 as Class 1 ("Action"). However, if the alert is the only alert in the alert report 114 and has a low severity level, the validation rule(s) 316 can indicate that the alert 112 should be re-classified to Class 0 ("No Action"). In response, the resolution determination circuitry 608 can re-classify the alert 112. The validation rule(s) 616 safeguard against over-reliance on model outputs and ensure that automation is applied in cases where confidence is sufficiently high.

In examples in which the resolution determination circuitry 608 classifies the alert 112 as Class 1, the alert processing circuitry 610 communicates with the instruction determination circuitry 502 to, for example, cause instructions or messages to be output via the store audit application 106. Put another way, when the supervised model 314 has high confidence that an alert warrants action (i.e., the alert is assigned to Class 1 ("Action") classification), then the alert processing circuitry 610 causes the action predicted by the model 314 for the alert to be automatically executed or otherwise implemented by an electronic device without further human intervention or decision-making. For example, if the supervised model 314 determines that a store revisit is warranted (e.g., based on historical patterns of auditor behavior where a revisit was previously determined to be the appropriate action), then the alert processing circuitry 610 causes a request for additional store-level data and/or a request for the store to be revisited to be automatically generated and output via, for example, the store audit application 106, without human intervention.

In examples in which the resolution determination circuitry 608 classifies the alert 112 as Class 0 ("No Action") (or the alert 112 is re-classified as Class 0 based on the validation rule(s) 616), the alert processing circuitry 610 can cause a status of the alert in the alert report 114 to be updated to closed (e.g., update the alert status data 209 in the alert report 114, update the model review status data 210 in the alert report 114 to indicate that the alert has been closed as result of the machine learning analysis).

In examples in which the resolution determination circuitry 608 classifies the alert 112 as Class 2 or Class 3 (e.g., for further review), the alert processing circuitry 610 generates report(s) including the probability scores, anomaly indicators, and historical comparisons. The alert processing circuitry 610 outputs the report(s) for presentation via an electronic device.

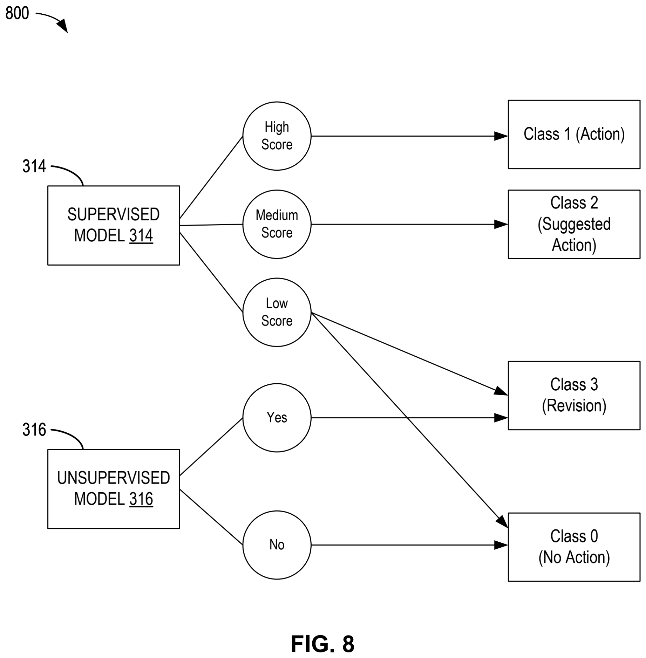

FIG. 8 illustrates an example diagram 800 representing predictions by the supervised model 314 and the unsupervised model 316 and the resulting classifications assigned by the resolution determination circuitry 608 of the alert analysis circuitry 116 of FIG. 6. As represented in the diagram 800 of FIG. 8, the supervised model 314 generates outputs indicative of a likelihood that an alert warrants an action. The predictions of the supervised model 314 are evaluated using the rescaled scores and threshold *T* as disclosed in connection with FIG. 6. Also, the unsupervised model 316 generates outputs indicative of a likelihood of the alert representing an anomaly or deviation from expected auditor behavior (e.g., anomaly = yes or anomaly = no).

As illustrated in FIG. 8, Class 0 ("No Action") corresponds to instances where both the supervised and unsupervised models 314, 316 agree that an action is not warranted in response to an alert 112. Class 1 ("Action") corresponds to instances where the supervised model 314 has high confidence that an action is warranted in response to an alert 112. In some such examples, because the confidence of the supervised model 314 exceeds the threshold T, the output from the unsupervised model 316 is not considered when classifying the alert 112 in Class 1. Class 2 ("Suggested Action") corresponds to instances where the supervised model 314 is less confident as compared to Class 1 but still predicts that an action is likely warranted in response to the alert 112. The Class 2 alerts are flagged for further review (e.g., manual review). Class 3 ("Revision") corresponds to instances in which the supervised model 314 has low confidence that an action is warranted in response to an alert but the unsupervised model 316 identified the alert as an anomaly for further review. As disclosed herein, Class 3 alerts may arise when an alert has not appeared before in the historical data used to train the supervised model 314 and, thus, the supervised model 314 does not recognize the alert and/or recognize that the alert may warrant action.

While an example manner of implementing the training circuitry 120 of FIG. 1 is illustrated in FIG. 3, one or more of the elements, processes, and/or devices illustrated in FIG. 3 may be combined, divided, re-arranged, omitted, eliminated, and/or implemented in any other way. Further, the example preprocessing circuitry 300, the example feature selection circuitry 302, the example model training circuitry 304, the example performance assessment circuitry 306, and/or, more generally, the example training circuitry 120 of FIG. 3, may be implemented by hardware alone or by hardware in combination with software and/or firmware. Thus, for example, any of the example preprocessing circuitry 300, the example feature selection circuitry 302, the example model training circuitry 304, the example performance assessment circuitry 306, and/or, more generally, the example training circuitry 120, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine-readable instructions (e.g., firmware or software). Further still, the example training circuitry 120 of FIG. 2 may include one or more elements, processes, and/or devices in addition to, or instead of, those illustrated in FIG. 2, and/or may include more than one of any or all of the illustrated elements, processes, and devices.

While an example manner of implementing the store audit analysis circuitry 110 of FIG. 1 is illustrated in FIG. 5, one or more of the elements, processes, and/or devices illustrated in FIG. 5 may be combined, divided, re-arranged, omitted, eliminated, and/or implemented in any other way. Further, the example store-level analysis circuitry 500, the example alert analysis circuitry 116, the example instruction determination circuitry 502, and/or, more generally, the example store audit analysis circuitry 110 of FIG. 5, may be implemented by hardware alone or by hardware in combination with software and/or firmware. Thus, for example, any of the example store-level analysis circuitry 500, the example alert analysis circuitry 116, the example instruction determination circuitry 502, and/or, more generally, the example store audit analysis circuitry 110, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine-readable instructions (e.g., firmware or software). Further still, the example store audit analysis circuitry 110 of FIG. 5 may include one or more elements, processes, and/or devices in addition to, or instead of, those illustrated in FIG. 5, and/or may include more than one of any or all of the illustrated elements, processes, and devices.

While an example manner of implementing the alert analysis circuitry 116 of FIG. 1 is illustrated in FIG. 6, one or more of the elements, processes, and/or devices illustrated in FIG. 6 may be combined, divided, re-arranged, omitted, eliminated, and/or implemented in any other way. Further, the example feature selection circuitry 600, the example supervised model execution circuitry 602, the example score analysis circuitry 604, the example unsupervised model execution circuitry 606, the example resolution determination circuitry 608, the example alert processing circuitry 610, and/or, more generally, the example alert analysis circuitry 116 of FIG. 6, may be implemented by hardware alone or by hardware in combination with software and/or firmware. Thus, for example, any of the example feature selection circuitry 600, the example supervised model execution circuitry 602, the example score analysis circuitry 604, the example unsupervised model execution circuitry 606, the example resolution determination circuitry 608, the example alert processing circuitry 610, and/or, more generally, the example alert analysis circuitry 116, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine-readable instructions (e.g., firmware or software). Further still, the example alert analysis circuitry 116 of FIG. 6 may include one or more elements, processes, and/or devices in addition to, or instead of, those illustrated in FIG. 6, and/or may include more than one of any or all of the illustrated elements, processes, and devices.

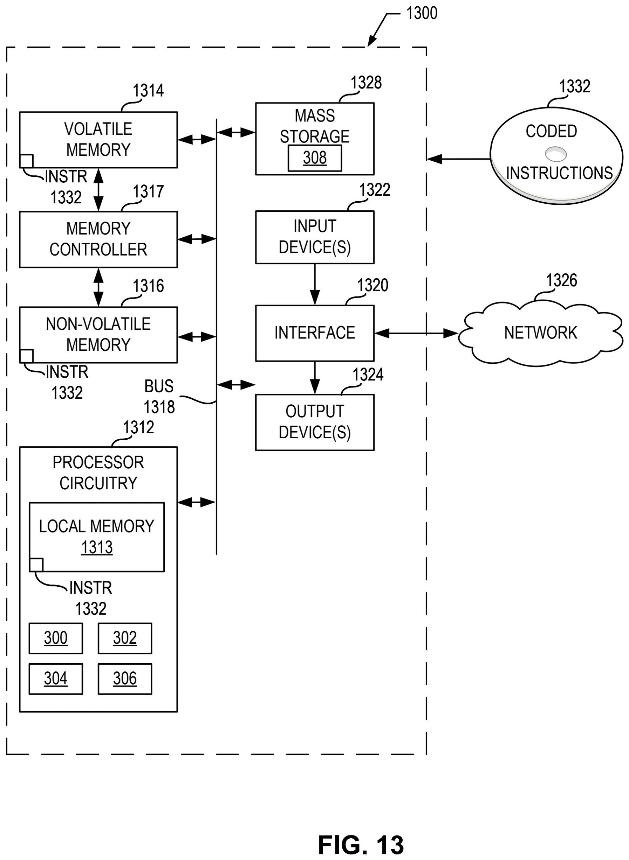

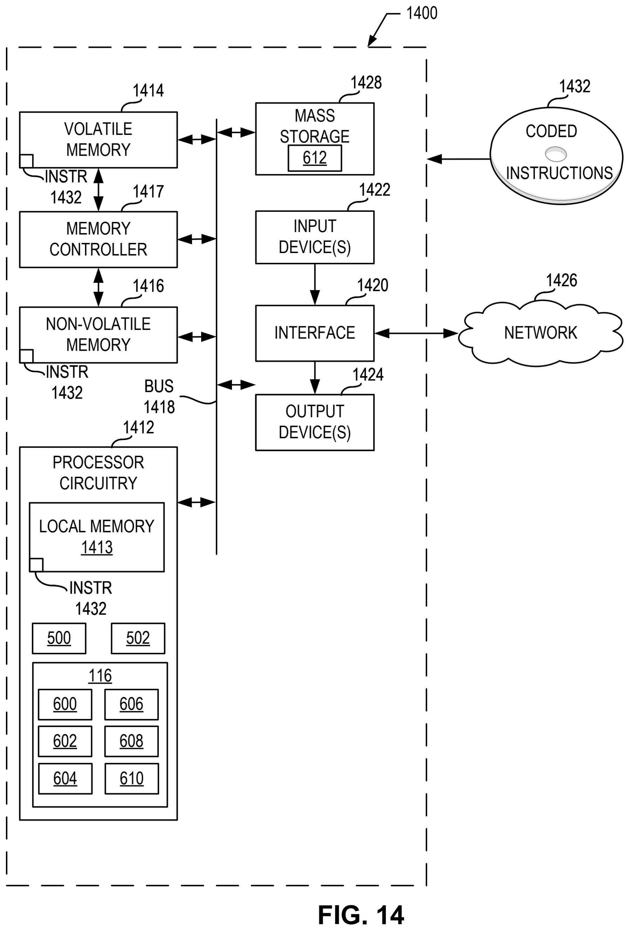

Flowcharts representative of example machine-readable instructions, which may be executed by programmable circuitry to implement and/or instantiate the training circuitry 120 of FIG. 3 and/or representative of example operations which may be performed by programmable circuitry to implement and/or instantiate the training circuitry 120 of FIG. 3, are shown in FIGS. 9 and 10. Flowcharts representative of example machine-readable instructions, which may be executed by programmable circuitry to implement and/or instantiate the alert analysis circuitry 116 of FIG. 5 and/or the store audit analysis circuitry 110 of FIG. 3 and/or representative of example operations which may be performed by programmable circuitry to implement and/or instantiate the alert analysis circuitry 116 of FIG. 5 and/or the store audit analysis circuitry 110 of FIG. 3, are shown in FIGS. 11 and 12. The machine-readable instructions may be one or more executable programs or portion(s) of one or more executable programs for execution by programmable circuitry such as the programmable circuitry 1312, 1412 shown in the example processor platform 1300, 1400 discussed below in connection with FIGS. 13 and 14 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowcharts illustrated in FIGS. 9-12, many other methods of implementing the example training circuitry 120, the example alert analysis circuitry 116, and/or the example store audit analysis circuitry 110 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above. As used herein, the term "circuitry" refers to at least one "circuit." Thus, circuitry refers to a circuit or a system of circuits. As used herein, programmable circuitry includes and/or corresponds to at least one programmable circuit.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C-Sharp, Perl, Python, JavaScript, HyperText Markup Language (HTML), Structured Query Language (SQL), Swift, etc.

As mentioned above, the example operations of FIGS. 9-12 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 9 is a flowchart representative of example machine-readable instructions and/or example operations 900 that may be executed, instantiated, and/or performed by programmable circuitry to train the supervised model 314 and the unsupervised model 316 to analyze alerts associated with in-store audits or visits. The example machine-readable instructions and/or the example operations 900 of FIG. 9 begin at block 902, at which the preprocessing circuitry 300 and the feature selection circuitry 302 of the example training circuitry 120 of FIG. 3 preprocess training data (e.g., the training alert reports 310, the training action reports 312), as discussed in connection with FIG. 10.

At block 904, the model training circuitry 304 of the example training circuitry 120 of FIG. 3 performs data splitting of the training data to provide training data sets for supervised training data and training data for unsupervised training. At block 906, the model training circuitry 304 performs supervised training to generate the trained supervised model 314 and performs unsupervised training to generate the trained unsupervised model 316 using the respective training data sets.

At block 908, the performance assessment circuitry 306 of the example training circuitry 120 of FIG. 3 evaluates the outputs of the trained models 314, 316 relative to, for example, ground truth data, to determine if re-training and/or refinements of the model(s) 314, 316 should be performed. The example instructions 900 end when no further training (e.g., re-training) is to be performed (blocks 910, 912).

FIG. 10 is a flowchart representative of example machine-readable instructions and/or example operations 902 that may be executed, instantiated, and/or performed by programmable circuitry to perform preprocessing of training data. The example machine-readable instructions and/or the example operations 902 begin at block 1000 at which the preprocessing circuitry 300 cleans data in the training alert reports 310 to, for example, remove noise from the data. At block 1002, the feature selection circuitry 302 identifies (e.g., determines, computes) categorical features and numerical features in training alert reports 310 for a given SLA identifier 206. At block 1004, the feature selection circuitry 302 encodes the categorical features using, for example, one-hot encoding. At block 1006, the feature selection circuitry 302 normalizes the numerical features. The feature selection circuitry 302 outputs a feature vector including the encoded categorical features and the normalized numerical features.

At block 1008, the preprocessing circuitry 300 applies ground truth label(s) to the feature vector based on data in the training action reports 312 indicating whether or not an action should be performed in response to an alert. At block 1010, the preprocessing circuitry 300 removes duplicative data having identical feature values but different ground truth labels by selecting the data associated with the most frequently occurring ground truth label.

At block 1012, the preprocessing circuitry 300 applies a ground truth label to the feature vector (after removal of the duplicative data), where the ground truth label indicates that failing to respond to a chatbot (e.g., the chatbot application 108) during an in-store visit is an alert that warrants action.

At block 1014, the preprocessing circuitry 300 outputs the feature vector as preprocessed training data. Control proceeds to block 904 when no further training alert reports 310 are to be preprocessed (block 1016).

FIG. 11 is a flowchart representative of example machine-readable instructions and/or example operations 1100 that may be executed, instantiated, and/or performed by programmable circuitry to analyze alerts associated with a store-level analysis (e.g., resulting from an in-store visit) using machine learning models. The example instructions 1100 begin at block 1102 at which the feature selection circuitry 600 of the example alert analysis circuitry 116 of FIG. 6 generates a feature vector including categorical features and numerical features based on alerts 112 in an alert report 114 for a given SLA identifier 206 associated with a store-level analysis for a store.

At block 1104, the supervised model execution circuitry 602 executes the trained supervised model 314 using the feature vector as inputs to generate supervised outputs, where a supervised output includes a probability that an alert warrants an action. In some examples, the supervised output predicts an action to be performed in response to the alert (e.g., based on confidence of the supervised model 314 that an action should be performed in response to the alert).

At block 1106, the score analysis circuitry 604 determines a confidence threshold *T* based on, for example, an ROC curve for the supervised model 314. At block 1108, the score analysis circuitry 604 performs rescaling using the model outputs to generate confidence scores with respect to a probability that a given alert 112 warrants an action.

At block 1110, the unsupervised model execution circuitry 606 executes the trained unsupervised model 316 using the feature vector as inputs to generate unsupervised outputs.

At block 1112, the resolution determination circuitry 608 classifies a given alert based on the confidence scores associated with the supervised machine learning analysis, the unsupervised outputs, and the score framework 614 that defines the classifications and associated actions. At bock 1114, the resolution determination circuitry 608 validates the classifications using the validation rule(s) 616 so that the classifications align with domain knowledge based operational procedures for processing alert(s) (e.g., which may result in the resolution determination circuitry 608 re-classifying an alert if, for example, the operational procedures indicate that an action is not warranted despite the prediction of the supervised model 314).

At block 1116, the alert processing circuitry 610 processes the alert based on the classification, as discussed in connection with FIG. 12. The example instructions 1100 end when no further alert reports are to be analyzed (blocks 1118, 1120).

FIG. 12 is a flowchart representative of example machine-readable instructions and/or example operations 1114 that may be executed, instantiated, and/or performed by programmable circuitry to process an alert 112 in an alert report 114 based on the alert classifications identified via the supervised and unsupervised machine learning analysis. The example instructions 1114 begin at block 1200, at which the alert processing circuitry 610 determines if an alert 112 has been classified as Class 1 ("Action"), indicating that the supervised model 314 predicted that the alert warrants action. If the alert 112 has been classified as Class 1, then at block 1202, the alert processing circuitry 610 generates instructions for the predicted action. For example, the alert processing circuitry 610 can generate instructions for a message requesting collection of additional store-level data (e.g., via a revisit to the store) to be displayed via the store audit application 106 and/or instructions for auditor training material to be displayed via the store audit application 106. At block 1204, the alert processing circuitry 610 communicates with the instruction determination circuitry 502 of the example store audit analysis circuitry 110 of FIG. 5 to cause an electronic device to execute, implement, or otherwise effect the action (e.g., cause the store audit application 106 to display the instruction for the store to be revisited, cause the store audit application 106 to display the training material).

In examples in which the alert 112 is classified (or re-classified) as Class 0 ("No Action) (block 1206), then at block 1208, the alert processing circuitry 610 adjusts the status of the alert 112 to close the alert 112 (e.g., update the alert status data 209 in the alert report 114, update the model review status data 210 in the alert report 114 to indicate that the alert has been closed as result of the machine learning analysis).

In examples in which the alert 112 is classified as Class 2 ("Suggested Action") (block 1210), then at block 1212, the alert processing circuitry 610 cause report(s) identifying the alert(s) in Class 2 to be output for review. Also, in examples in which the alert 112 is classified as Class 3 ("Revision"), then the alert processing circuitry 610 cause report(s) identifying the alert(s) in Class 2 to be output for review (block 1214). Control proceeds to block 1118 when there are no further alerts to process (block 1216).

FIG. 13 is a block diagram of an example programmable circuitry platform 1300 structured to execute and/or instantiate the example machine-readable instructions and/or the example operations of FIGS. 9 and/or 10 to implement the training circuitry 120 of FIG. 3. The programmable circuitry platform 1300 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a headset (e.g., an augmented reality (AR) headset, a virtual reality (VR) headset, etc.) or other wearable device, or any other type of computing and/or electronic device.

The programmable circuitry platform 1300 of the illustrated example includes programmable circuitry 1312. The programmable circuitry 1312 of the illustrated example is hardware. For example, the programmable circuitry 1312 can be implemented by one or more integrated circuits, logic circuits, FPGAs, microprocessors, CPUs, GPUs, VPUs, DSPs, and/or microcontrollers from any desired family or manufacturer. The programmable circuitry 1312 may be implemented by one or more semiconductor based (e.g., silicon based) devices. In this example, the programmable circuitry 1312 implements the example preprocessing circuitry 300, the example feature selection circuitry 302, the example model training circuitry 304, and the example performance assessment circuitry 306.

The programmable circuitry 1312 of the illustrated example includes a local memory 1313 (e.g., a cache, registers, etc.). The programmable circuitry 1312 of the illustrated example is in communication with main memory 1314, 1316, which includes a volatile memory 1314 and a non-volatile memory 1316, by a bus 1318. The volatile memory 1314 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1316 may be implemented by flash memory and/or any other desired type of memory device. Access to the main memory 1314, 1316 of the illustrated example is controlled by a memory controller 1317. In some examples, the memory controller 1317 may be implemented by one or more integrated circuits, logic circuits, microcontrollers from any desired family or manufacturer, or any other type of circuitry to manage the flow of data going to and from the main memory 1314, 1316.

The programmable circuitry platform 1300 of the illustrated example also includes interface circuitry 1320. The interface circuitry 1320 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1322 are connected to the interface circuitry 1320. The input device(s) 1322 permit(s) a user (e.g., a human user, a machine user, etc.) to enter data and/or commands into the programmable circuitry 1312. The input device(s) 1322 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1324 are also connected to the interface circuitry 1320 of the illustrated example. The output device(s) 1324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1320 of the illustrated example, thus, typically includes a graphics driver card, a graphics driver chip, and/or graphics processor circuitry such as a GPU.

The interface circuitry 1320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1326. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1300 of the illustrated example also includes one or more mass storage discs or devices 1328 to store firmware, software, and/or data. Examples of such mass storage discs or devices 1328 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1332, which may be implemented by the machine-readable instructions of FIGS. 9 and 10, may be stored in the mass storage device 1328, in the volatile memory 1314, in the non-volatile memory 1316, and/or on at least one non-transitory computer-readable storage medium such as a CD or DVD which may be removable.

FIG. 14 is a block diagram of an example programmable circuitry platform 1400 structured to execute and/or instantiate the example machine-readable instructions and/or the example operations of FIGS. 11 and/or 12 to implement the train of FIG. audit analysis circuitry 116 of FIG. 6 and the store audit analysis circuitry 110 of FIG. 5. The programmable circuitry platform 1400 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a headset (e.g., an augmented reality (AR) headset, a virtual reality (VR) headset, etc.) or other wearable device, or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, VPUs, DSPs, and/or microcontrollers from any desired family or manufacturer. The programmable circuitry 1412 may be implemented by one or more semiconductor based (e.g., silicon based) devices. In this example, the programmable circuitry 1412 implements the example store-level analysis circuitry 500, the example instruction determination circuitry 502, and the example alert analysis circuitry 116 including the example feature selection circuitry 600, the example supervised model execution circuitry 602, the example score analysis circuitry 604, the example unsupervised model execution circuitry 606, the example resolution determination circuitry 608, and the example alert processing circuitry 610.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1432, which may be implemented by the machine-readable instructions of FIGS. 11 and 12, may be stored in the mass storage device 1428, in the volatile memory 1414, in the non-volatile memory 1416, and/or on at least one non-transitory computer-readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide for alert classification through a combination of supervised and unsupervised machine learning models, severity-aware calibration, and multi-faceted classification strategies. Examples disclosed herein provide an AI-driven solution for alert classification that combines a supervised deep learning model with an unsupervised decision tree-based approach. As a result, the disclosed examples provide for increase automation in identifying and responding to alerts based on confidence scores predicted by the supervised learning, while using unsupervised machine learning to detect anomalies and emerging patterns in alerts in connection with store-level analyses.

Example systems, apparatus, and methods for store-level analysis using artificial intelligence are disclosed herein. Further examples and combinations thereof include the following:
Example 1 includes an apparatus including interface circuitry to receive an alert report generated by a mobile application, the alert report associated with store-level data for a store; machine-readable instructions; and at least one programmable circuit to at least one of instantiate or execute the machine-readable instructions to generate a feature vector based on the alert report, the feature vector including features corresponding to alert types; execute a supervised machine learning model using the feature vector to generate a supervised output for an alert in the alert report, the supervised output representing a likelihood of the alert warranting an action; execute an unsupervised machine learning model using the feature vector to generate an unsupervised output; classify the alert based on at least one of the supervised output or the unsupervised output; and cause an electronic device to execute the action based on the classification of the alert, the action associated with a status of the alert or a request for additional store-level data.
Example 2 includes any preceding clause(s) of Example 1, wherein one more of the at least one programmable circuit is to compute numerical features associated with a severity level of the alert, the feature vector including the numerical features.
Example 3 includes any preceding clause(s) of any one or more of Examples 1 and 2, one or more of the at least one programmable circuit is to encode the features corresponding to the alert types.
Example 4 includes any preceding clause(s) of any one or more of Examples 1-3, wherein one or more of the least one programmable circuit is to determine a confidence threshold based on the supervised output.
Example 5 includes any preceding clause(s) of any one or more of Examples 1-4, wherein the supervised output corresponds to a probability score and one or more of the least one programmable circuit is to scale the probability score to generate a scaled confidence score; perform a comparison of the scaled confidence score to the confidence threshold; and classify the alert based on the classification.
Example 6 includes any preceding clause(s) of any one or more of Examples 1-5, wherein the action is to cause the electronic device to display a message including the request for the additional store-level data.
Example 7 includes any preceding clause(s) of any one or more of Examples 1-6, wherein the action is to cause the electronic device to update the status of the alert in the alert report from an open status to a closed status.
Example 8 includes an apparatus including interface circuitry to receive an alert report generated by a mobile application, the alert report including alerts associated with store-level data for a store; machine-readable instructions; and at least one programmable circuit to at least one of instantiate or execute the machine-readable instructions to compute numerical features based on a severity level assigned to respective ones or the alerts; identify categorical features representing alert types based on the alerts in the report; generate a feature vector including the numerical features and the categorical features; execute a machine learning model using the feature vector; assign a classification to a first one of the alerts based on execution of the machine learning model; and cause an electronic device to execute an action responsive to the first one of the alerts based on the classification, the action associated with a status of the first one of the alerts or a request for additional store-level data.
Example 9 includes any preceding clause(s) of Example 8, wherein the machine learning model is a supervised machine learning model and one or more of the least one programmable circuit to execute an unsupervised machine learning model using the feature vector; and assign the classification based on outputs of the supervised machine learning model and outputs of the unsupervised machine learning model.
Example 10 includes any preceding clause(s) of any one or more of Examples 8 and 9, wherein one or more of the at least one programmable circuit is to cause the electronic device to adjust the status of the first one of the alerts in the alert report from an open status to a close status in response to the classification assigned based on the outputs of the supervised machine learning model and the outputs of the unsupervised machine learning model.
Example 11 includes any preceding clause(s) of any one or more of Examples 8-10, wherein one or more of the least one programmable circuit is to encode the categorical features, the encoding indicative of a presence of respective ones of the alert types in the alert report.
Example 12 includes any preceding clause(s) of any one or more of Examples 8-11, wherein one or more of the at least one programmable circuit is to perform an optimization to determine a confidence threshold based on outputs of the machine learning model.
Example 13 includes any preceding clause(s) of any one or more of Examples 8-12, wherein one or more of the at least one programmable circuit is to apply an adjustment to a confidence score corresponding to an output of the machine learning model; perform a comparison of the confidence score to the confidence threshold; and assign the classification based on the comparison.
Example 14 includes a non-transitory machine-readable storage medium including machine-readable instructions to cause at least one programmable circuit to at least generate a feature vector based on an alert report, the feature vector including features corresponding to alert types; execute a supervised machine learning model using the feature vector to generate a supervised output for an alert in the alert report, the supervised output representing a likelihood of the alert warranting an action; execute an unsupervised machine learning model using the feature vector to generate an unsupervised output; classify the alert based on at least one of the supervised output or the unsupervised output; and cause an electronic device to execute the action based on the classification of the alert, the action associated with a status of the alert or a request for additional store-level data.
Example 15 includes any preceding clause(s) of Example 14, wherein the machine-readable instructions are to cause one or more of the at least one programmable circuit to compute numerical features associated with a severity level of the alert, the feature vector including the numerical features.
Example 16 includes any preceding clause(s) of any one or more of Examples 14 and 15, wherein the machine-readable instructions are to cause one or more of the at least one programmable circuit to encode the features corresponding to the alert types.
Example 17 includes any preceding clause(s) of any one or more of Examples 14-16, wherein the machine-readable instructions are to cause one or more of the at least one programmable circuit to determine a confidence threshold based on the supervised output.
Example 18 includes any preceding clause(s) of any one or more of Examples 14-17, wherein the supervised output corresponds to a probability score and the machine-readable instructions are to cause one or more of the at least one programmable circuit to scale the probability score to generate a scaled confidence score; perform a comparison of the scaled confidence score to the confidence threshold; and classify the alert based on the classification.
Example 19 includes any preceding clause(s) of any one or more of Examples 14-18, wherein the action is to cause the electronic device to display a message including the request for the additional store-level data.
Example 20 includes any preceding clause(s) of any one or more of Examples 14-19, wherein the action is to cause the electronic device to update the status of the alert in the alert report from an open status to a closed status.
Example 21 includes a method including generating, by at least one programmable circuit programmed by at least one instruction, a feature vector based on an alert report, the feature vector including features corresponding to alert types; executing, by one or more of the at least one programmable circuit, a supervised machine learning model using the feature vector to generate a supervised output for an alert in the alert report, the supervised output representing a likelihood of the alert warranting an action; executing, by one or more of the at least one programmable circuit, an unsupervised machine learning model using the feature vector to generate an unsupervised output; classifying, by one or more of the at least one programmable circuit, the alert based on at least one of the supervised output or the unsupervised output; and causing, by one or more of the at least one programmable circuit, an electronic device to execute the action based on the classification of the alert, the action associated with a status of the alert or a request for additional store-level data.
Example 22 includes any preceding clause(s) of Example 21, further including computing numerical features associated with a severity level of the alert, the feature vector including the numerical features.
Example 23 includes any preceding clause(s) of any one or more of Examples 21 and 22, further including encoding the features corresponding to the alert types.
Example 24 includes any preceding clause(s) of any one or more of Examples 21-23, further including determining a confidence threshold based on the supervised output.
Example 25 includes any preceding clause(s) of any one or more of Examples 21-24, wherein the supervised output corresponds to a probability score and further including scaling the probability score to generate a scaled confidence score; performing a comparison of the scaled confidence score to the confidence threshold; and classifying the alert based on the classification.
Example 26 includes any preceding clause(s) of any one or more of Examples 21-25, wherein the action is to cause the electronic device to display a message including the request for the additional store-level data.
Example 27 includes any preceding clause(s) of any one or more of Examples 21-26, wherein the action is to cause the electronic device to update the status of the alert in the alert report from an open status to a closed status.
Example 28 includes a machine-readable storage including machine-readable instructions to implement a method or realize an apparatus or system as set forth in any preceding example.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry to receive an alert report generated by a mobile application, the alert report associated with store-level data for a store;
machine-readable instructions; and
at least one programmable circuit to at least one of instantiate or execute the machine-readable instructions to:
generate a feature vector based on the alert report, the feature vector including features corresponding to alert types;
execute a supervised machine learning model using the feature vector to generate a supervised output for an alert in the alert report, the supervised output representing a likelihood of the alert warranting an action;
execute an unsupervised machine learning model using the feature vector to generate an unsupervised output;
classify the alert based on at least one of the supervised output or the unsupervised output; and
cause an electronic device to execute the action based on the classification of the alert, the action associated with a status of the alert or a request for additional store-level data.

2. The apparatus of claim 1, wherein one more of the at least one programmable circuit is to compute numerical features associated with a severity level of the alert, the feature vector including the numerical features.

3. The apparatus of claim 1, one or more of the at least one programmable circuit is to encode the features corresponding to the alert types.

4. The apparatus of claim 1, wherein one or more of the least one programmable circuit is to determine a confidence threshold based on the supervised output.

5. The apparatus of claim 4, wherein the supervised output corresponds to a probability score and one or more of the least one programmable circuit is to:
scale the probability score to generate a scaled confidence score;
perform a comparison of the scaled confidence score to the confidence threshold; and
classify the alert based on the classification.

6. The apparatus of claim 1, wherein the action is to cause the electronic device to
display a message including the request for the additional store-level data.

7. The apparatus of claim 1, wherein the action is to cause the electronic device to update
the status of the alert in the alert report from an open status to a closed status.

8. A method including:
generating a feature vector based on an alert report, the feature vector including features corresponding to alert types;
executing a supervised machine learning model using the feature vector to generate a supervised output for an alert in the alert report, the supervised output representing a likelihood of the alert warranting an action;
executing an unsupervised machine learning model using the feature vector to generate an unsupervised output;
classifying the alert based on at least one of the supervised output or the unsupervised output; and
causing an electronic device to execute the action based on the classification of the alert, the action associated with a status of the alert or a request for additional store-level data.

9. The method of claim 8, further including computing numerical features associated with a severity level of the alert, the feature vector including the numerical features.

10. The method of claim 8, further including encoding the features corresponding to the alert types.

11. The method of claim 8, further including determining a confidence threshold based on the supervised output.

12. The method of claim 11, wherein the supervised output corresponds to a probability score and further including:
scaling the probability score to generate a scaled confidence score;
performing a comparison of the scaled confidence score to the confidence threshold; and
classifying the alert based on the classification.

13. The method of claim 8, wherein the action is to cause the electronic device to display a message including the request for the additional store-level data.

14. The method of claim 8, wherein the action is to cause the electronic device to update the status of the alert in the alert report from an open status to a closed status.

15. A machine-readable storage including machine-readable instructions to implement a method or realize an apparatus or system as set forth in any preceding example.
